# EUROPÄISCHE PATENTANMELDUNG

(11) **EP 3 978 169 A1**
(43) Veröffentlichungstag der Anmeldung: **06.04.2022**
(21) Anmeldenummer: 21201031.8
(22) Anmeldetag: 05.10.2021
(51) Int. Cl.: B23B 31/28

(54) **SPANNVORRICHTUNG, SPINDELANORDNUNG SOWIE WERKZEUGMASCHINE**

(30) Priorität: 05.10.2020 DE 102020126006
(71) Anmelder: Sterman Technische Systeme GmbH, 78112 St. Georgen (DE)
(72) Erfinder: Lermer, Stephan, 78112 St. Georgen (DE); Koch, Pascal, 78087 Mönchweiler (DE)
(74) Vertreter: Westphal, Mussgnug & Partner Patentanwälte mbB

(57) **Zusammenfassung**

Die vorliegende Erfindung betrifft eine Spannvorrichtung (1) einer Werkzeugmaschine mit einer als Hohlwelle (11) ausgebildeten angetriebenen Arbeitsspindel (10), an der in einem ersten Endbereich (14) ein Spannfutter (5) zum Spannen eines Werkstücks für die rotierende Bearbeitung angeordnet werden kann und an einem zweiten Endbereich (15) die Spannvorrichtung (1), aufweisend eine Gehäuseanordnung (20), eine Betätigungseinheit (25) und eine Zugstange (30), wobei die Betätigungseinheit (25) in der Gehäuseanordnung (20) angeordnet ist und die Zugstange (30) betätigen kann, wobei die Zugstange (30) zum Übertragen einer Axialkraft mit dem Spannfutter (5) koppelbar ist, und wobei mindestens ein zu der Gehäuseanordnung (20) feststehender Leiter (45) vorgesehen ist, der eine Verbindung zwischen der Gehäuseanordnung (20) und dem Spannfutter (5) durch die Arbeitsspindel (10) herstellen kann. Darüber hinaus betrifft die vorliegende Erfindung eine Spindelanordnung (3) sowie eine Werkzeugmaschine, insbesondere eine Drehmaschine oder eine Schleifmaschine.

## Beschreibung

Die vorliegende Erfindung betrifft eine Spannvorrichtung einer Werkzeugmaschine mit einer als Hohlwelle ausgebildeten angetriebenen Arbeitsspindel, an der ein Spannfutter zum Spannen eines Werkstücks mittels einer Zugstange für die rotierende Bearbeitung angeordnet werden kann, mit den Merkmalen des Patentanspruchs 1, eine Spindelanordnung einer Werkzeugmaschine mit den Merkmalen des Patentanspruchs 18 und eine Werkzeugmaschine, insbesondere eine Drehmaschine oder eine Schleifmaschine, mit den Merkmalen des Patentanspruchs 19.

Spannvorrichtungen sind aus dem Stand der Technik in unterschiedlichen Ausgestaltungen vorbekannt und dienen der Betätigung eines Spannfutters. Gattungsgemäße Spannvorrichtungen sind typischer Weise an einer angetriebenen Arbeitsspindel einer Werkzeugmaschine angeordnet, wobei die Arbeitsspindel einen ersten Endbereich und einen zweiten Endbereich aufweist und als Hohlwelle ausgebildet ist. Der erste Endbereich ragt typischer Weise in einen Bearbeitungsraum oder Prozessraum einer Werkzeugmaschine hinein. In dem ersten Endbereich kann an der Arbeitsspindel ein Spannfutter angeordnet werden, in das ein Werkstück zu Bearbeitungszwecken eingespannt werden kann. Der zweite Endbereich ist auf einer von dem Bearbeitungsraum abgewandten Seite angeordnet und kann eine hydraulische Spannvorrichtung mit einer Betätigungseinrichtung aufweisen, die mittels einer Zugstange mit dem Spannfutter verbunden ist. Das Spannfutter weist ferner Spannmittel auf, die das Werkstück kraft- und/oder formschlüssig halten können. Die Zugstange ist durch einen Hohlraum der Arbeitsspindel hindurchgeführt.

Auch kann das Spannmittel in dem Spannfutter angeordnet sein und hydraulisch, pneumatisch oder elektromechanisch betätigt werden, um das Werkstück zu Bearbeitungszwecken in dem Bearbeitungsraum zu positionieren.

In der Vergangenheit wurden zahlreiche Spannvorrichtungen vorgeschlagen, die beispielsweise elektrisch betätigbar sind. Beispielsweise ist aus der EP 3 246 119 A1 eine elektrische Spannvorrichtung mit einer elektrischen Betätigungseinheit vorbekannt. Die Übertragung der elektrischen Energie zu der Betätigungseinheit erfolgt kabellos.

Bei derartigen Lösungen hat sich als Nachteil gezeigt, dass die Menge an übertragbarer Energie zum elektrischen Spannen des Werkstücks begrenzt ist und eine Energieübertragung störanfällig ist. Daher wurden im Stand der Technik lösbare Steckverbindungen entwickelt, die eine kabelgebundene Energieversorgung aufbauen können, sobald die Arbeitsspindel zum Stillstand kommt. Auch bei diesen Steckverbindungen sind Verschmutzungen in dem Bearbeitungsraum der Werkzeugmaschine, beispielsweise Späne oder Flüssigkeiten, eine Herausforderung, weshalb aufwändige Verschlüsse und Dichtungen vorgesehen werden, um die Steckverbindungen zu schützen. Weiterhin können diese aus dem Stand der Technik bekannten Lösungen keine dauerhafte Verbindung bereitstellen, um eine Mehrzahl von Sensoren oder elektrischen Stellgliedern zu betätigen.

DE 10 2018 107 670 A1 lehrt ein durch eine Spannvorrichtung mit einer Zugstange betätigbares Spannfutter, wobei die Lage des Werkstückes in der Spannvorrichtung durch Piezoelemente sowohl kontrolliert als auch veränderbar ist. Bei der Übertragung der Signale und der elektrischen Energie für die Piezoelemente hat sich gezeigt, dass die aus dem oben erläuterten Stand der Technik bekannten Lösungen zur Energie- und/oder Signalübertragung störanfällig sind und keine ausreichende Spannungsversorgung für die Sensoren und Piezoelemente ermöglichen.

Hier setzt die vorliegende Erfindung an.

Die vorliegende Erfindung widmet sich der Aufgabe eine Spannvorrichtung vorzuschlagen, die in zweckmäßiger Weise die aus dem Stand der Technik bekannten Nachteile behebt. Die Spannvorrichtung soll gegenüber Verschmutzungen in dem Bearbeitungsraum einer Werkzeugmaschine robust sein und sowohl das Spannfutter während der Bearbeitung mit elektrischer Energie versorgen können als auch eine uni- oder bidirektionale Kommunikation von Stellgliedern sowie von Sensoreinrichtungen in dem Spannfutter ermöglichen. Auch soll die Spannvorrichtung an bereits bestehenden Werkzeugmaschinen nachrüstbar sein, ohne dass die Arbeitsspindel modifiziert werden muss.

Diese Aufgaben werden durch eine Spannvorrichtung mit den Merkmalen des Patentanspruchs 1, eine Spindelanordnung mit den Merkmalen des Patentanspruchs 18 sowie durch eine Werkzeugmaschine mit den Merkmalen des Patentanspruchs 19 gelöst.

Weitere vorteilhafte Ausgestaltungen der vorliegenden Erfindung werden in den Unteransprüchen angegeben.

Die erfindungsgemäße Spannvorrichtung mit den Merkmalen des Patentanspruchs 1 für eine Werkzeugmaschine, insbesondere eine Dreh- oder Schleifmaschine, mit einer als Hohlwelle ausgebildeten angetriebenen Arbeitsspindel an der in einem ersten Endbereich ein Spannfutter zum Spannen eines Werkstücks für die rotierende Bearbeitung und an einem zweiten Endbereich die Spannvorrichtung angeordnet werden kann, wobei die Spannvorrichtung eine Gehäuseanordnung, eine Betätigungseinheit und eine Zugstange aufweist. Erfindungsgemäß ist die Betätigungseinheit in der Gehäuseanordnung angeordnet und kann die Zugstange, vorzugsweise durch Aufbringen einer zu der Arbeitsspindel koaxial gerichteten Axialkraft, betätigen, wobei die Zugstange zum Übertragen der Axialkraft mit dem Spannfutter durch die Arbeitsspindel hindurch koppelbar ist, und wobei mindestens ein zu der Gehäuseanordnung feststehender Leiter vorgesehen ist, der eine Verbindung zwischen der Gehäuseanordnung und dem Spannfutter durch die Arbeitsspindel herstellen kann.

Der vorliegenden Erfindung liegt die Idee zu Grunde, eine leitergebundene Verbindung zwischen dem ersten Endbereich der Arbeitsspindel und dem zweiten Endbereich der Arbeitsspindel bereitzustellen, die durch die Arbeitsspindel hindurchgeführt ist. Während der erste Endbereich den Einflüssen, insbesondere Spänen und Kühlmittel, in dem Bearbeitungsraum ausgesetzt ist, ist der zweite Endbereich vor einer unmittelbaren Einwirkung der Einflüsse in dem Bearbeitungsraum geschützt.

Die vorgeschlagene Spannvorrichtung ermöglicht eine einfache Nachrüstung bereits bestehender Werkzeugmaschinen. Eine Modifikation der Arbeitsspindel sowie weiterer Bestandteile der Werkzeugmaschine ist nicht notwendig; es muss lediglich ein Teil der Spannvorrichtung in dem zweiten Endbereich der Arbeitsspindel ausgetauscht werden.

Gemäß einer weiteren vorteilhaften Ausgestaltung der vorliegenden Erfindung ist der mindestens eine Leiter ein elektrischer Leiter und/oder ein medienführender Leiter, der relativ zu der Gehäuseanordnung feststehend von der Gehäuseanordnung zu dem Spannfutter durch die Arbeitsspindel geführt werden kann. Demnach ist der mindestens eine Leiter derart ausgebildet, dass dieser benachbart, vorzugsweise parallel, zu der Zugstange durch die als Hohlwelle ausgebildeten Arbeitsspindel durchgeführt werden kann, jedoch nicht der Zustellbewegung der Zugstange folgt. Somit ist der mindestens eine Leiter gegenüber der Zugstange unbeweglich angeordnet und auch keinen Axialkräften ausgesetzt.

Eine weitere bevorzugte Ausgestaltung der vorliegenden Erfindung sieht vor, dass die Betätigungseinheit hydraulisch oder pneumatisch betätigbar ist. Insbesondere ist es bevorzugt, wenn die Betätigungseinheit hydraulisch betätigbar ist, wodurch einerseits eine hohe Spannkraft aufgebracht werden kann, und andererseits die Spannkraft während der rotierenden Bearbeitung aufrecht gehalten werden kann.

Nach Maßgabe einer weiteren Ausgestaltung der vorliegenden Erfindung ist es vorgesehen, dass mindestens eine Übertragungseinrichtung vorgesehen ist, und dass die mindestens eine Übertragungseinrichtung eine Kommunikation zwischen dem mindestens einen Leiter und einem nicht mit der Arbeitsspindel rotierenden ersten Bestandteil ermöglicht. Der nicht-rotierende erste Bestandteil kann starr mit dem Stator der Arbeitsspindel der Spindelanordnung bzw. in der Werkzeugmaschine angeordnet sein, wobei die mindestens eine Übertragungseinrichtung vorzugsweise berührungslos mindestens ein elektrisches Signal, ein optisches Signal und/oder ein Medium aus dem nicht mit der Arbeitsspindel rotierenden ersten Bestandteil in einen mit der Arbeitsspindel rotierenden zweiten Bestandteil und den dort angeordneten mindestens einen Leiter übertragen kann.

Gemäß einer Weiterbildung der vorliegenden Erfindung überträgt die mindestens eine Übertragungseinrichtung mindestens ein elektrisches Signal kapazitiv, induktiv oder optisch zwischen der nicht-rotierenden Einheit und dem mindestens einen Leiter in der Gehäuseanordnung.

Weiterhin kann es vorteilhaft sein, wenn die mindestens eine Übertragungseinrichtung in dem zweiten Endbereich angeordnet ist. Bevorzugt ist die Übertragungseinrichtung auf der von dem Spannfutter abgewandten Seite der Arbeitsspindel und der Betätigungseinheit angeordnet. Der mindestens eine Leiter kann weiterhin in der Gehäuseanordnung an der Betätigungseinheit - vorzugsweise durch die Gehäuseanordnung hindurch - vorbeigeführt werden. Auf der von dem Spannfutter abgewandten Seite der Arbeitsspindel und der Betätigungseinheit ist in den weitverbreiteten Werkzeugmaschinen ausreichend Bauraum vorhanden, um die Spannvorrichtung mit der mindestens einen Übertragungseinrichtung anzuordnen. Darüber hinaus ist die mindestens eine Übertragungseinrichtung nicht in dem Kraftpfad zwischen der Betätigungseinrichtung und dem Spannfutter angeordnet und somit wird die mindestens eine Übertragungseinrichtung nicht durch etwaige Spannkräfte mechanisch belastet. Weiterhin ist durch eine solche Anordnung der Übertragungseinrichtung eine Längenausdehnung der Arbeitsspindel nicht relevant und die Übertragungseinrichtung kann von der Gehäuseanordnung entkoppelt sein.

Eine weitere vorteilhafte Ausgestaltung der vorliegenden Erfindung sieht eine Kolbenstange vor, die die Betätigungseinheit in der Gehäuseanordnung mit der Zugstange koppelt. Insbesondere ist es bevorzugt, wenn die Kolbenstange in der Gehäuseanordnung mit einem Druckkolben, der in einem Spannzylinder beweglich angeordnet ist, gekoppelt ist und Verbindungsmittel aufweist, durch die eine lösbare Verbindung mit der Zugstange hergestellt werden kann. Auch kann es bevorzugt sein, wenn die Kolbenstange und die Zugstange oder die Kolbenstange, der Druckkolben und die Zugstange einstückig, also integral, ausgebildet sind.

Weiterhin hat es sich als vorteilhaft erwiesen, wenn die Kolbenstange und/oder die Zugstange mindestens einen Kanal ausbilden, wobei die Kolbenstange und/oder die Zugstange von dem Kanal von dem ersten Endbereich bis zu dem zweiten Endbereich vollständig durchdrungen werden, wodurch der Kanal durchgängig ausgebildet ist und beispielsweise ein Medium, wie Luft, Kühlwasser, Schmiermittel oder dergleichen übertragen kann.

In einer bevorzugten Weiterbildung der vorliegenden Erfindung ist der mindestens eine Kanal mediendicht und für den Durchgang von Medien konfiguriert.

Gemäß einer Weiterbildung der vorliegenden Erfindung kann der mindestens eine Kanal einen optischen Leiter aufnehmen. Der optische Leiter muss nicht zwangsweise aus einem festen lichtleitfähigen Werkstoff hergestellt sein, sondern kann in einer bevorzugten Weiterbildung lediglich einen lichtdurchgängigen Kanal ausbilden, durch den durch optische Mittel eine Datenkommunikation ermöglicht werden kann.

Eine weitere Ausgestaltung der vorliegenden Erfindung sieht eine weitere Übertragungseinheit vor, durch die eine Verbindung zwischen einem nicht um die Längsachse rotierbaren ersten Bestandteil, welcher bevorzugt drehfest zu dem Stator angeordnet ist und dem mindestens einen Kanal bereitstellt. Der mindestens eine Kanal kann in einen zweiten Bestandteil, der beispielsweise eine Kavität aufweist, münden, wobei der zweite Bestandteil drehfest mit der Arbeitsspindel gekoppelt ist. Die weitere Übertragungseinheit ermöglicht einem Medium, aus dem mit dem Stator feststehenden und nicht-rotierbaren System in das mit der Arbeitsspindel rotierende System übertragen zu werden.

Gemäß einer weiteren Ausgestaltung der vorliegenden Erfindung umfasst die Gehäuseanordnung eine zu der Gehäuseanordnung feststehende Verbindungseinheit, die innerhalb der Arbeitsspindel anordnenbar ist und von der Zugstange durchgegriffen wird.

Weiterhin hat es sich als vorteilhaft erwiesen, wenn die Verbindungseinheit mit dem mindestens einen Leiter parallel zu der Zugstange angeordnet ist und die Antriebsspindel durchgreift. Die Verbindungseinheit kann beispielsweise als Hohlwelle oder als Hülse ausgebildet sein und weist vorzugsweise den mindestens einen feststehenden Leiter auf. Weiterhin ist die Verbindungseinheit unbeweglich gegenüber der Gehäuseanordnung und der Antriebspindel angeordnet.

Gemäß einer weiteren vorteilhaften Ausgestaltung der vorliegenden Erfindung ist die feststehende Verbindungseinheit einenends fest mit der Gehäuseanordnung verbunden und ragt von der Gehäuseanordnung feststehend in einen Hohlraum der als Hohlwelle ausgebildeten Arbeitsspindel. Die feststehende Verbindungseinheit kann aus einem beliebigen Werkstoff einteilig oder mehrteilig hergestellt sein. Beispielsweise kann die Verbindungseinheit aus einem metallischen Werkstoff, einem Kunststoff oder einem Mehrkomponenten-Werkstoff hergestellt sein.

Eine Weiterbildung der vorliegenden Erfindung sieht vor, dass die feststehende Verbindungseinheit an einem frei von der Gehäuseanordnung abstehenden Endbereich mindestens ein Verbindungsmittel aufweist, durch das der mindestens eine Leiter mit dem Spannfutter verbunden werden kann. Insbesondere ist es bevorzugt, wenn das mindestens eine Verbindungsmittel eine mechanisch starre Verbindung, beispielsweise eine Steckverbindung, bewerkstelligen kann und durch unmittelbaren Kontakt eine Verbindung für das mindestens eine elektrische Signal auf dem elektrischen Leiter oder eine unmittelbare Verbindung zwischen dem das Medium übertragenden Leiter und dem Spannfutter herstellen kann. Die Steckverbindung soll weiterhin ein geringfügiges axiales Spiel ermöglichen, wodurch ein Toleranzausgleich erfolgen kann.

Darüber hinaus hat es sich als vorteilhaft erwiesen, wenn die Spannvorrichtung eine Steuer- und/oder Regelungselektronik aufweist. Eine Steuer- und/oder Regelungselektronik kann in oder an einem mit der Arbeitsspindel drehfest gekoppelten Bauteil, beispielsweise der Gehäuseanordnung oder der Verbindungseinheit, angeordnet sein. Bevorzugt ist die Steuer- und/oder Regelungselektronik mit dem feststehenden Leiter verbunden. Der feststehende Leiter kann die Steuer- und/oder Regelungselektronik mit Energie versorgen und kann weiterhin über einen feststehenden Leiter von außen angesprochen werden. Die Steuer- und/oder Regelungselektronik kann somit Befehle erhalten, als auch Informationen ausgeben. Mit anderen Worten ermöglicht der feststehende Leiter neben einer Spannungsversorgung eine uni- oder bidirektionale Kommunikation. Weiterhin kann die Steuer- und/oder Regelungselektronik kabelgebunden mit den Verbindungsmittel verbunden sein.

Die Steuer- und/oder Regelungselektronik ist in einer Ausgestaltung an der feststehenden Verbindungseinheit angeordnet und weiterhin bevorzugt in dem von der Gehäuseanordnung frei abstehenden Endbereich.

Eine weitere vorteilhafte Ausgestaltung der vorliegenden Erfindung sieht vor, dass der mindestens eine Leiter in der feststehenden Verbindungseinheit eingebettet ist. Beispielsweise kann der mindestens eine Leiter in Form einer Leiterbahn an, in oder auf der feststehenden Verbindungseinheit angeordnet sein, wobei um die Leiterbahn ein Dielektrikum vorgesehen sein kann. Insbesondere ist es bevorzugt, wenn die Verbindungseinheit zumindest bereichsweise aus einem Dielektrikum ausgebildet ist und die Leiterbahn umschließt.

Ein weiterer Aspekt der vorliegenden Erfindung betrifft eine Spindelanordnung, aufweisend einen Stator und in dem Stator eine um eine Längsachse drehbare, als Hohlwelle ausgebildete Arbeitsspindel mit einem ersten Endbereich und einem zweiten Endbereich, wobei die zuvor beschriebene Spannvorrichtung an dem zweiten Endbereich anordnenbar ist und die Zugstange und der feststehende Leiter die Arbeitsspindel durchgreifen können.

Gemäß einer Weiterbildung der Spindelanordnung weist die Spindelanordnung ferner ein Spannfutter auf, welches an dem ersten Endbereich an der angetriebenen Arbeitsspindel anordnenbar ist. Das Spannfutter kann weiterhin bevorzugt mindestens einen Sensor und/oder mindestens einen Aktor aufweisen, wobei der mindestens eine Sensor und/oder der mindestens eine Aktor mit dem mindestens einen feststehenden Leiter kommunizieren kann bzw. mit ihm verbunden sein kann. Der mindestens eine Sensor kann beispielsweise eine Lage des Werkstückes in dem Spannfutter oder eine auf das Werkstück oder Spannfutter wirkende Kraft, Drehmoment oder Spannung erfassen. Der mindestens eine Aktor kann gemäß einer bevorzugten Ausgestaltung eine Kraft auf ein in dem Spannfutter angeordnetes Werkstück ausüben.

Darüber hinaus hat es sich weiterhin als vorteilhaft erwiesen, wenn die Steuer- und/oder Regelungselektronik vorgesehen ist, und dass die Steuer- und/oder Regelungselektronik sowohl mit dem mindestens einen feststehenden Leiter als auch mit dem mindestens einen Sensor und/oder dem mindestens einen Aktor verbunden ist. Die Steuer- und/oder Regelungselektronik weist bevorzugt eine Auswerteelektronik auf, die Messdaten des Sensors auswerten kann und/oder, bevorzugt in Echtzeit, den mindestens einen Aktor ansteuern kann. Die Steuer- und/oder Regelungselektronik kann weiterhin zwischen dem feststehenden Leiter und den Sensoren angeordnet sein, wobei eine Leistungsversorgung mittels des mindestens einen feststehenden Leiters erfolgt.

Insbesondere ist es bevorzugt, wenn die Steuer- und/oder Regelungselektronik in der Spannvorrichtung in einem mit der Arbeitsspindel rotierenden Bauteil, beispielsweise der Gehäuseanordnung, der Verbindungseinheit und/oder dem mit der Arbeitsspindel rotierenden Bestandteil der Übertragungseinrichtung angeordnet ist. Alternativ oder ergänzend kann die Steuer- und/oder Regelungselektronik in dem Spannfutter angeordnet sein.

Bevorzugt ist die Steuer- und/oder Regelungselektronik im ersten Endbereich angeordnet, wodurch Übertragungswege zwischen dem mindestens einen Sensor und/oder dem mindestens einen Aktor kurzgehalten werden. Insbesondere ist es bevorzugt, wenn die Steuer- und/oder Regelungselektronik benachbart zu den Verbindungsmitteln an dem freien Ende der Verbindungseinheit angeordnet ist.

Ein weiterer Aspekt der vorliegenden Erfindung betrifft eine Werkzeugmaschine, insbesondere eine Drehmaschine oder eine Schleifmaschine, mit einer erfindungsgemäßen Spannvorrichtung.

Nachfolgend wird unter Bezugnahme auf die begleitende Zeichnung ein Ausführungsbeispiel im Detail beschrieben.

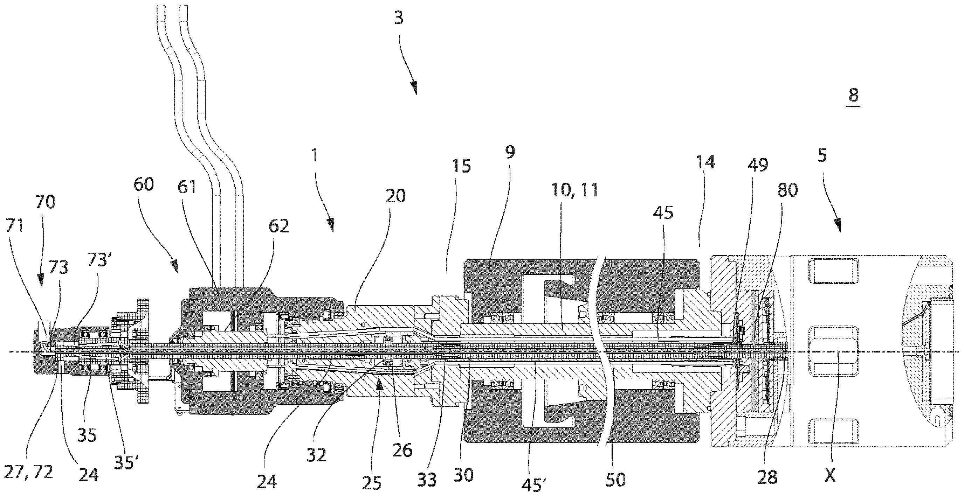

Figur 1 zeigt eine schematische Schnittdarstellung einer Spindelanordnung 3 einer nicht vollständig dargestellten Werkzeugmaschine. Die Spindelanordnung 3 umfasst einen Stator und einen Rotor, der koaxial in einer Längsachse X angeordnet ist, und um die Längsachse X rotieren kann. Der Rotor ist angetrieben und umfasst eine Arbeitsspindel 10 mit einem ersten Endbereich 14 und einem zweiten Endbereich 15. Die Arbeitsspindel 10 ist als eine Hohlwelle ausgebildet, die einen Hohlraum aufweist, der entlang der Längsachse X angeordnet ist. Zur Veranschaulichung sind in Figur 1 alle Komponenten der Spindelanordnung 3, welche nicht um die Längsachse X drehbar sind, mit einer starken Schraffierung kenntlich gemacht und die mit der Arbeitsspindel rotierbaren oder teileweise mit-rotierenden Teile (z.B. Lager) vorwiegend mit einer schwachen Linien- oder Karoschraffierung.

Der erste Endbereich 14 ist auf einer einem Bearbeitungsraum 8 zugewandten Seite der Spindelanordnung 3 angeordnet. In dem ersten Endbereich 14 kann ein nur teilweise und vereinfacht dargestelltes Spannfutter 5 angeordnet werden, das zusammen mit der angetriebenen Arbeitsspindel 10 um die Längsachse X rotieren kann.

Weiterhin umfasst die Spindelanordnung 3 eine Spannvorrichtung 1 mit einer Gehäuseanordnung 20, einer Betätigungseinheit 25 und einer Zugstange 30, wobei die Zugstange 30 zum Übertragen einer Spannkraft mit dem Spannfutter 5 durch die Arbeitsspindel 10 koppelbar ist. Hierzu kann die Zugstange 30 in einem Endabschnitt 28 Verbindungsmittel aufweisen.

Darüber hinaus ist mindestens ein Leiter 45 - wie nachfolgend detailliert erläutert wird - vorgesehen, der eine feststehende Verbindung zwischen der Gehäuseanordnung 20 und dem Spannfutter 5 durch die Arbeitsspindel 10 hindurch herstellt. Der mindestens eine Leiter 45 ist in der begleitenden Figur nicht detailliert dargestellt.

An dieser Stelle wird angemerkt, dass mehrere Leiter vorgesehen sein können, die symmetrisch zu der Längsachse X angeordnet sind und die Gehäuseanordnung 20 und das Spannfutter 5 durch die Arbeitsspindel 10 hindurch verbinden.

Auf der dem Spannfutter 5 gegenüberliegenden Seite des Stators der Spindelanordnung 3 ist die Gehäuseanordnung 20 vorgesehen, die drehfest mit der Arbeitsspindel 10 verbunden ist und mit der Arbeitsspindel 10 um die Längsachse X rotieren kann. In der Gehäuseanordnung 20 ist die Betätigungseinheit 25 vorgesehen, welche konfiguriert ist, die Spannkraft für das Spannfutter 5 zu erzeugen.

Zu diesem Zweck ist die Betätigungseinheit 25 mittels der Zugstange 30 mit dem Spannfutter 5 verbunden, wobei die Betätigungseinheit 25 die Spannkraft als Axialkraft parallel zu der Längsachse X erzeugen kann, welche durch die Zugstange 30 auf bekannte Weise durch die als Hohlwelle oder hohlzylindrische Welle ausgebildete Arbeitsspindel 10 durchgeführt wird. Die Zugstange 30 ist in der Längsachse X in dem Hohlraum der Arbeitsspindel 10 axial beweglich.

Auf der von dem Spannfutter 5 abgewandten Seite der Arbeitsspindel 10 kann die Zugstange 30 mit einer Kolbenstange 24 verbunden sein, wobei die Kolbenstange 24 koaxial zu der Zugstange 30 eine Verlängerung darstellt. Die Zugstange 30 und die Kolbenstange 24 können durch entsprechende Verbindungsmittel 33 zum Übertragen einer Axialkraft bzw. Spannkraft verbunden sein, wobei ebenfalls die Kolbenstange 24 und die Zugstange 30 integral, also aus einem einzigen Stück, hergestellt sein können.

Die Betätigungseinheit 25 kann einen Spannzylinder 26, in dem ein Druckkolben 32 beweglich angeordnet ist, umfassen. Der Druckkolben 32 ist auf der Kolbenstange 24 angeordnet und unterteilt den Spannzylinder 26 in zwei Bereiche, welche zum Erzeugen der Spannkraft hydraulisch und/oder pneumatisch druckbeaufschlagt werden können, um den Druckkolben 32 in dem Spannzylinder 26 in der Längsachse X zu verschieben. Der Druckkolben 32 bzw. die Kolbenstange 24 ist mit der Zugstange 30 gekoppelt, durch welche durch die Arbeitsspindel 10 hindurch die Spannkraft zum Spannfutter 5 übertragen werden kann. Das Spannfutter 5 leitet die Spannkraft auf das Werkstück.

Die Gehäuseanordnung 20 und das Spannfutter 5 sind auf gegenüberliegenden Seiten der Arbeitsspindel 10 angeordnet, wodurch etwaige Spannkräfte auf die Arbeitsspindel 10 wirken und sich gegenseitig aufheben.

Weiterhin ist aus Figur 1 ersichtlich, dass zwischen der Gehäuseanordnung 20 und dem Spannfutter 5 in der Längsachse X eine mechanische Verbindung vorgesehen ist, durch die die Gehäuseanordnung 20 mit dem ersten Endbereich 14 der Arbeitsspindel 10 bzw. dem Spannfutter 5 verbunden ist. Die Verbindung wird in dem vorliegenden Ausführungsbeispiel durch eine an der Gehäuseanordnung 20 starr angebundene Verbindungseinheit 50 bewerkstelligt, wobei die Verbindungseinheit 50 als eine Hohlwelle oder als eine Hülse ausgebildet ist.

Die Verbindungseinheit 50 muss nicht zwangsweise eine hohlzylindrische Hülse sein, sondern kann ebenfalls ein oder mehrere zwischen der Zugstange 30 und der Arbeitsspindel 10 unbeweglich angeordneter Stab, Steg oder Stange sein, der um die Längsachse X zusammen mit der Gehäuseanordnung 20 und der Arbeitsspindel 10 rotieren kann und im Gegensatz zu der Zugstange 30 in der Längsachse X unbeweglich ist. Die Verbindungseinheit 50 ist in einem Spaltraum zwischen der Zugstange 30 und der Arbeitsspindel 10 angeordnet, wobei vorzugsweise ein Laufspalt zwischen der Verbindungseinheit 50 und der Zugstange 30 vorgesehen ist, durch den die Zugstange 30 kontakt- und/oder reibungsfrei bzw. reibungsminimiert zu der Verbindungseinheit 50 in der Längsrichtung X verschoben werden kann.

Die Verbindungseinheit 50 kann aus einem beliebigen Werkstoff hergestellt sein, beispielsweise aus einem Kunststoff, einem Verbund-Werkstoff, Metall, Glas oder aus einer Kombinationen dieser und kann weiterhin den mindestens einen feststehenden Leiter 45 aufweisen, der an, in oder auf der Verbindungseinheit 50 angeordnet ist und den ersten Endbereich 14 und den zweiten Endbereich 15 verbindet. Die Verbindungseinheit 50 kann einen einzigen oder eine Vielzahl von Leitern 45 aufweisen, wobei die Leiter 45 bevorzugt als kabelgebundene elektrische Leiter 45 zum Übertragen eines elektrischen Signals oder eines Stromes ausgebildet sind. Auch kann der Leiter 45 ein gas- und/oder flüssigkeitsdichter Leiter für ein Medium oder einen optischen Leiter mit/oder ohne ein Leitmittel wie Glasfaser, Lichtleiter o. Ä. sein.

Die Verbindungseinheit 50 kann für den mindestens einen Leiter 45 eine Aufnahme aufweisen, in der der mindestens eine Leiter 45 in der Verbindungseinheit 50 eingebettet sein kann. Die Aufnahme kann eine entlang der Längsachse X ausgebildete Nut sein, in welcher der mindestens eine Leiter 45 angeordnet sein kann. Weiter bevorzugt kann die Aufnahme mit einem Füllmittel ausgefüllt werden, wonach der Leiter 45 innerhalb der Aufnahme verschlossen bzw. eingebettet und geschützt angeordnet ist.

In dem ersten Endbereich 14 kann die Verbindungseinheit 50 Verbindungsmittel 49 aufweisen, die konfiguriert sind, den mindestens einen Leiter 45 mit dem mindestens einen Spannfutter 5 zu verbinden, um beispielsweise das Spannfutter 5 mit elektrischem Strom zu versorgen und/oder Sensordaten oder dergleichen von dem Spannfutter 5 zu übertragen. Die Verbindungsmittel 49 können so konfiguriert sein, dass ein axiales Montagespiel zum Toleranzausgleich vorhanden ist. Auch kann ein Bussystem vorgesehen sein, welches eine bidirektionale Kommunikation und gleichzeitige Stromversorgung ermöglicht.

Eine Steuer- und/oder Regelungselektronik 80 kann weiterhin vorgesehen sein, welche Daten der Sensoren des Spannfutters auswerten kann und die Aktoren in dem Spannfutter regeln kann. Die Steuer- und/oder Regelungselektronik 80 kann bevorzugt an einem mit der Arbeitsspindel drehfest gekoppelten Bauteil angeordnet sein, wodurch die Steuer- und/oder Regelungselektronik 80 zusammen mit der Arbeitsspindel rotieren kann.

Die Steuer- und/oder Regelungselektronik 80 kann über den mindestens einen feststehenden Leiter 45 mit elektrischer Energie versorgt werden und sowohl Steuerbefehle erhalten als auch Daten/Informationen senden. Weiterhin kann die Steuer- und/oder Regelungselektronik 80 elektrisch mit den Verbindungsmitteln 49 verbunden sein und über diese mit dem mindestens einen Sensor und/oder Aktor in dem Spannfutter 5 verbunden sein.

Die Steuer- und/oder Regelungselektronik 80 kann - wie der begleitenden Zeichnung entnommen werden kann - an der Verbindungseinheit 50, insbesondere an dem von der Gehäuseanordnung 20 frei abstehenden Endbereich, angeordnet sein.

Die Steuer- und/oder Regelungselektronik 80 kann sowohl in Abhängigkeit von dem Drehwinkel der Arbeitsspindel die Aktoren in dem Spannfutter 5 regeln als auch unabhängig von dem Drehwinkel der Arbeitsspindel. Zu diesem Zweck kann beispielsweise eine Schnittstelle vorgesehen sein, die mit einem entsprechenden Sensor zur Erfassung des Drehwinkels der Arbeitsspindel verbunden ist oder mit einer Steuerung der Werkzeugmaschine kommunizieren kann. Durch die Steuer- und/oder Regelungselektronik 80 kann die Spannvorrichtung 1 als ein intelligentes System die rotierende Bearbeitung eines Werkstücks unterstützen. Die Steuer- und/oder Regelungselektronik 80 kann programmierbar sein und mit dem Spannfutter in Echtzeit kommunizieren bzw. Aktoren insbesondere die Piezoaktoren des Spannfutters gemäß der DE 10 2018 107 670 A1 ansteuern als auch auslesen.

In dem zweiten Endbereich 15 kann der mindestens eine Leiter 45 durch die Gehäuseanordnung 20 bis zu einer Übertragungseinrichtung 60 auf der von dem Spannfutter 5 abgewandten Seite der Gehäuseanordnung 20 geführt werden. Die Übertragungseinrichtung 60 weist einen nicht mit der Arbeitsspindel 10 rotierbaren stationären Bestandteil 61 und einen mit der Arbeitsspindel 10 rotierbaren zweiten Bestandteil 62 mit Übertragungsmitteln auf, die konfiguriert sind, mindestens ein elektrisches Signal und/oder einen elektrischen Strom von dem stationären Bestandteil 61 zu dem zweiten Bestandteil 62 und vice versa zu übertragen. Die Übertragung des mindestens einen elektrischen Signals und/oder des elektrischen Stroms kann induktiv und/oder über einen oder mehrere Schleifringe erfolgen. Alternativ kann das mindestens eine Signal kapazitiv, induktiv oder optisch übertragen werden.

Die Übertragungseinrichtung 60 ist auf der von der Arbeitsspindel 10 abgewandten Seite der Betätigungseinheit 25 angeordnet und der mindestens eine Leiter 45 ist in der Gehäuseanordnung 20 um den Spannzylinder 26 geführt. Durch diese Anordnung wird sichergestellt, dass keine Axialkräfte bzw. Spannkräfte mittelbar oder unmittelbar auf die Übertragungseinrichtung 60 wirken. Weiterhin ist dadurch die Übertragungseinrichtung 60 von einer mechanischen oder thermischen Längenausdehnung der Arbeitsspindel 10 entkoppelt.

Wie weiterhin der Figur 1 zu entnehmen ist, kann sowohl die Zugstange 30 als auch die Kolbenstange 24 einen oder mehrere Kanäle 35 aufweisen, die sich bevorzugt parallel zu der Längsachse X von dem ersten Endbereich 14 bis zu dem freien Ende der Kolbenstange 24 erstrecken. Der mindestens eine Kanal 35 ist mediendicht ausgebildet bzw. mit anderen Worten ausgedrückt gas- und/oder flüssigkeitsdicht, wodurch ein Medium von dem freien Ende bis zu dem ersten Endbereich 14 leckagefrei geleitet werden kann.

Das Medium, welches durch den mindestens einen Kanal 35 geleitet wird, kann beispielsweise Kühlwasser, Druckluft, Öl oder dergleichen sein und kann mittels einer weiteren Übertragungseinrichtung 70 in dem Bereich eines freien Endes 27 der Kolbenstange 24 von einem nicht mit der Arbeitsspindel 10 rotierenden ersten Bestandteil 71 zu einem mit der Arbeitsspindel 10 rotierenden zweiten Bestandteil 72 übertragen werden, wobei sowohl der zweite Bestandteil 72 und bevorzugt auch der erste Bestandteil 71 in der Längsachse X mit der Zugstange 30 bzw. der Kolbenstange 24 beweglich sind. Die weitere Übertragungseinrichtung 70 kann einen hydraulischen und/oder pneumatischen Drehübertrager umfassen. Der erste Bestandteil 71 ist drehfest zu dem Stator angeordnet und kann durch herkömmliche Lager an der Kolbenstange 24 oder der Gehäuseanordnung 20 verbunden sein.

Der zweite Bestandteil 72 weist insbesondere eine Kavität 73 auf, in die das Medium von dem ersten Bestandteil 71 eingebracht werden kann und über die das Medium zu dem mindestens einen Kanal 35 geleitet werden kann. Es ist anzumerken, dass - wie dargestellt - mehrere Kanäle 35, 35' für unterschiedliche Medien vorgesehen sein können, und dass für den jeweiligen Kanal 35, 35' jeweils eine Kavität 73, 73' vorgesehen sein kann, die entsprechend physisch getrennt sein können, um eine Vermischung der Medien zu vermeiden. Somit können über unterschiedliche Kanäle 35, 35', die ineinander oder nebeneinander durch die Zugstange geführt sind, unterschiedliche Medien durch die Zugstange 30 und/oder die feststehende Verbindungseinheit 50 zu dem Spannfutter 5 geleitet werden. In dem dargestellten Ausführungsbeispiel in dem Kanal 35 ist ein weiteres Rohr angeordnet, welches einen zweiten Kanal 35' ausbildet. Das weitere Rohr kann als Präzisionsrohr bzw. Ermeto-Rohr ausgebildet sein.

Der Kanal 35 kann auch einen optischen Leiter aufnehmen oder eine optische Verbindung zwischen dem ersten Endbereich 14 und dem freien Ende der Kolbenstange 24 bereitstellen, wodurch optische Signale übertragen werden können.

Die Spannvorrichtung 1 kann bei jeder beliebigen Spindelanordnung 3 auch nachträglich ohne weitere Modifikationen zur Anwendung kommen, ohne dass ein umfangreicher Umbau der Werkzeugmaschine notwendig ist. Hierzu wird eine bereits vorhandene Spannvorrichtung entfernt und in dem zweiten Endbereich 15 die Spannvorrichtung 1 bzw. die Gehäuseanordnung 20 mit der Arbeitsspindel 10 verbunden. Hierzu wird ausgehend von dem zweiten Endbereich 15 die feststehende Verbindungseinheit 50 in den Hohlraum der Arbeitsspindel 10 und zwischen die Arbeitsspindel 10 und die Zugstange 30 eingesetzt, bis die Gehäuseanordnung 20 an der Arbeitsspindel 10 bzw. einem Flansch der Arbeitsspindel 10 anliegt und die Kolbenstange 24 mit der Zugstange 30 verbunden ist. Nach einer erfolgten Befestigung der Spannvorrichtung 1 sind in dem ersten Endbereich 14 die Verbindungsmittel 49 der Leiter 45 zugänglich und eine Verbindung der Leiter 45 mit einem Spannfutter 5 kann bewerkstelligt werden. Ebenfalls kann durch entsprechende Mittel in dem Spannfutter 5 der mindestens eine Kanal 35 der Zugstange mit dem Spannfutter 5 verbunden werden, sodass das Spannfutter 5 sowohl mit elektrischer Energie, als auch mit elektrischen Signalen, Medien oder sonstigen Arbeitsflüssigkeiten von der von dem Bearbeitungsraum 8 abgewandten Seite der Arbeitsspindel 10 versorgt werden kann.

### Bezugszeichenliste

- 1: Spannvorrichtung
- 3: Spindelanordnung
- 5: Spannfutter
- 8: Bearbeitungsraum
- 10: Arbeitsspindel
- 11: Hohlwelle
- 14: erster Endbereich
- 15: zweiter Endbereich
- 20: Gehäuseanordnung
- 24: Kolbenstange
- 25: Betätigungseinheit
- 26: Spannzylinder
- 27: freies Ende
- 30: Zugstange
- 32: Druckkolben
- 33: Verbindungsmittel
- 35: Kanal

- 45: Leiter
- 49: Verbindungsmittel
- 50: Verbindungseinheit
- 60: Übertragungseinrichtung
- 61: erster Bestandteil
- 62: zweiter Bestandteil
- 70: Übertragungseinrichtung
- 71: erster Bestandteil
- 72: zweiter Bestandteil
- 73: Kavität
- 80: Steuer- und/oder Regelungselektronik
- X: Längsachse

## Patentansprüche

1. Spannvorrichtung (1) einer Werkzeugmaschine mit einer als Hohlwelle ausgebildeten angetriebenen Arbeitsspindel (10), an der in einem ersten Endbereich (14) ein Spannfutter (5) zum Spannen eines Werkstücks für die rotierende Bearbeitung angeordnet werden kann und an einem zweiten Endbereich (15) die Spannvorrichtung (1), aufweisend:
- eine Gehäuseanordnung (20),
- eine Betätigungseinheit (25) und
- eine Zugstange (30),
- wobei die Betätigungseinheit (25) in der Gehäuseanordnung (20) angeordnet ist und die Zugstange (30) betätigen kann,
- wobei die Zugstange (30) zum Übertragen einer Axialkraft mit dem Spannfutter (5) durch die Arbeitsspindel (10) hindurch koppelbar ist, und
- wobei mindestens ein zu der Gehäuseanordnung (20) feststehender Leiter (45) vorgesehen ist, der eine Verbindung zwischen der Gehäuseanordnung (20) und dem Spannfutter (5) durch die Arbeitsspindel (10) herstellen kann.

2. Spannvorrichtung (1) nach Anspruch 1,
**dadurch gekennzeichnet, dass** der mindestens eine Leiter (45) einen elektrischen Leiter, einen medienführenden Leiter und/oder einen optischen Leiter umfasst, der zu der Gehäuseanordnung (20) feststehend zu dem Spannfutter (5) durch die Arbeitsspindel (10) geführt werden kann.

3. Spannvorrichtung (1) nach Anspruch 1 oder 2,
**dadurch gekennzeichnet, dass** die Betätigungseinheit (25) hydraulisch oder pneumatisch betätigbar ist.

4. Spannvorrichtung (1) nach einem der Ansprüche 1 bis 3, **dadurch gekennzeichnet, dass** die mindestens eine Übertragungseinrichtung (60) vorgesehen ist, die mindestens ein elektrisches Signal zwischen einem nicht-rotierenden Bestandteil (61) und dem Leiter (45) übertragen kann.

5. Spannvorrichtung (1) nach Anspruch 4,
**dadurch gekennzeichnet, dass** die mindestens eine Übertragungseinrichtung (60) das mindestens eine elektrische Signal kapazitiv oder induktiv zwischen einem nicht-rotierenden Bestandteil (61) und dem mindestens einen Leiter (45) in der Gehäuseanordnung (20) überträgt.

6. Spannvorrichtung (1) nach einem der Ansprüche 4 oder 5, **dadurch gekennzeichnet, dass** die mindestens eine Übertragungseinrichtung (60) auf der von dem Spannfutter (5) abgewandten Seite der Betätigungseinheit (25) angeordnet ist.

7. Spannvorrichtung (1) nach einem der vorgenannten Ansprüche,
**dadurch gekennzeichnet, dass** die Betätigungseinheit (25) eine Kolbenstange (24) umfasst, die mit der Zugstange (30) koppelbar ist.

8. Spannvorrichtung (1) nach Anspruch 7,
**dadurch gekennzeichnet, dass** die Kolbenstange (24) und/oder die Zugstange (30) mindestens einen Kanal (35) aufweisen bzw. aufweist.

9. Spannvorrichtung (1) nach Anspruch 8,
**dadurch gekennzeichnet, dass** der mindestens eine Kanal (35) mediendicht ist und für einen Durchgang von Medien, insbesondere Hydraulikflüssigkeit, Druckluft, Kühlschmierstoff und/oder Emulsion ausgebildet ist.

10. Spannvorrichtung (1) nach Anspruch 8 oder 9,
**dadurch gekennzeichnet, dass** der mindestens eine Kanal (35) einen optischen Leiter aufnimmt.

11. Spannvorrichtung (1) nach einem der Ansprüche 8 bis 10, **dadurch gekennzeichnet, dass** mindestens eine weitere Übertragungseinrichtung (70) vorgesehen ist, welche mindestens eine Verbindung zwischen einem nicht mit der Antriebswelle (10) rotierenden Bestandteil (71) und dem mindestens Kanal (35) bildet.

12. Spannvorrichtung (1) nach einem der vorgenannten Ansprüche,
**dadurch gekennzeichnet, dass** die Gehäuseanordnung (20) eine Verbindungseinheit (50) umfasst, die von der Zugstange (30) durchgriffen wird, und dass die Verbindungseinheit (50) den mindestens einen Leiter (45) aufweist.

13. Spannvorrichtung (1) nach Anspruch 12,
**dadurch gekennzeichnet, dass** die Verbindungseinheit (50) einen ersten Endbereich fest mit der Gehäuseanordnung (20) verbindet.

14. Spannvorrichtung (1) nach Anspruch 12 oder 13,
**dadurch gekennzeichnet, dass** die Verbindungseinheit (50) an einem freien Ende Verbindungsmittel (49) aufweist, durch die der mindestens eine Leiter (45) mit dem Spannfutter (5) verbunden werden kann.

15. Spannvorrichtung (1) nach einem der Ansprüche 12 bis 14,
**dadurch gekennzeichnet, dass** der mindestens eine Leiter (45) auf der Verbindungseinheit (50) angeordnet ist oder in der Verbindungseinheit (50) eingebettet ist.

16. Spannvorrichtung (1) nach einem der vorgenannten Ansprüche,
**dadurch gekennzeichnet, dass** eine Steuer- und/oder Regelungselektronik (80) vorgesehen ist.

17. Spannvorrichtung (1) nach Anspruch 16,
**dadurch gekennzeichnet, dass** die Steuer- und/oder Regelungselektronik (80) drehstarr an der Gehäuseanordnung und/oder an der Verbindungseinheit (50) angeordnet ist.

18. Spindelanordnung (3) mit einer Spannvorrichtung (1) nach einem der Ansprüche 1 bis 17.

19. Werkzeugmaschine, insbesondere eine Drehmaschine oder eine Schleifmaschine, mit einer Spannvorrichtung (1) nach einem der Ansprüche 1 bis 17 oder einer Spindelanordnung (3) nach Anspruch 18.
